# EUROPEAN PATENT SPECIFICATION

(11) **EP 2 362 635 B1**
(45) Date of publication and mention of the grant of the patent: **03.04.2013**
(21) Application number: 10154690.1
(22) Date of filing: 25.02.2010
(51) Int. Cl.: H04N 5/00, H04N 7/167, G07F 7/00, H04L 9/08

(54) **Disabling a cleartext control word loading mechanism in a conditional access system**
Deaktivierung eines Klartextsteuerungs-Wortlademechanismus in einem System mit bedingtem Zugang
Désactivation d'un mécanisme de chargement de mots de contrôle de texte clair dans un système d'accès conditionnel

(43) Date of publication of application: 31.08.2011
(73) Proprietor: Irdeto B.V., 2132 LS Hoofddorp (NL)
(72) Inventor: Van de Ven, Antonius Johannes Petrus Maria, 3111 PG Schiedam (NL)
(74) Representative: Pelly, Jason Charles

(56) References cited:
- EP-A2- 1 353 511
- WO-A1-02/087144
- WO-A1-2005/048603
- FR-A1- 2 850 822
- FRANCIS ET AL: "Countermeasures for attacks on satellite TV cards using open receivers" AUSTRALASIAN INFORMATION SECURITY WORKSHOP.: DIGITAL RIGHTSMANAGEMENT, XX, XX, 6 November 2004 (2004-11-06), pages 1-6, XP002333719

## Description

### FIELD OF THE INVENTION

The present invention relates to a chipset for obtaining a control word to descramble content in a content descrambler, a method for use in the chipset, a secure device for use in a conditional access system, a head-end system, a method for use in the head-end system and a conditional access system.

### BACKGROUND

Conditional access systems for digital video broadcast (DVB) transmissions are well known and widely used in conjunction with pay television services. Such systems provide secure transmission of a broadcast stream comprising one or more services to a digital receiver contained for example in a set-top box or a mobile terminal supporting broadcast services. To protect the broadcast services from unauthorized viewing, the data packets are scrambled (encrypted) at the transmitter side with an encryption key commonly referred to as a control word. Further security is provided by periodically changing the control words so they are only valid for a certain period. Typically control words are transmitted in encrypted form to the receiver using so-called entitlement control messages (ECMs).

In the receiver an ECM is filtered out of a transport stream and sent to a secure computing environment, e.g. a smartcard. The smartcard subsequently decrypts the ECM using a higher-level key, which is common to all smartcards that are authorised to receive the TV channels associated with that key. The control word is returned to the receiver, which immediately loads the control word into the descrambler for descrambling data.

The transmission of control words from the smartcard to the receiver is vulnerable to interception of the control word on the interface between the smartcard and the receiver. Control word piracy is a significant problem in digital video broadcasting (DVB) systems. Sometimes attackers are able to intercept a control word that is transmitted from the smartcard to the receiver and redistribute it over local networks or over the internet. The redistributed control word is then used to descramble the scrambled services without a legitimate smartcard. In order to complicate control word piracy, it is known that the smartcard and receiver use a chipset session key CSSK for encrypting the stream of control words on the interface between the smartcard and the receiver.

The smartcard is pre-provisioned with a unique serial number and a unique key and the chipset of the receiver is also pre-provisioned with a chip set serial number CSSN. Moreover, a chip set unique key CSUK is stored in a secured portion of the receiver, and CSSN and CSUK are linked. CSSN and CSUK cannot be changed after being provisioned in the receiver. Key CSUK is not stored in the smartcard.

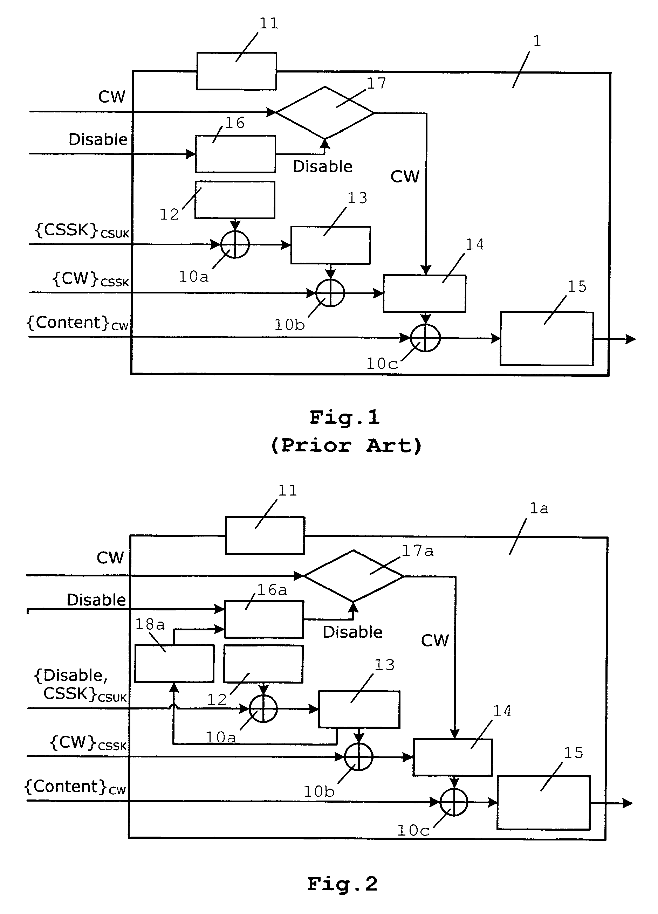

Fig.1 shows a prior art example of a chipset 1 of a receiver to load keys to descramble content. Decryptors 10a, 10b and 10c use encrypted input data and an input key to obtain decrypted output data. Elements 11 and 12 are read-only memory locations. Elements 13 and 14 are read-and-write memory locations for temporary storing decrypted output data. Content decoder 15 decodes the descrambled content. The secure chipset 1 further comprises a Disable Clear CW Loading (DCCL) module 16 and a blocking module 17. Dataflows between elements are indicated by arrows. Dataflows are identified by labels along the arrows.

In the example of Fig.1, a content stream scrambled with a control word CW, denoted by {Content}_{CW}, is received in the secure chipset 1. The chipset 1 supports secure loading of the associated CW using input {CW}_{CSSK}, which denotes the CW encrypted with a Chip Set Session Key 'CSSK'. The CSSK may be securely received encrypted with a Chip Set Unique Key 'CSUK', which is denoted by input {CSSK}_{CSUK}. The CSUK and a Chip Set Serial Number 'CSSN' are typically pre-installed in memory location 12 and memory location 11, respectively, and cannot be altered. The CSSN is typically available to software executing in the receiver for identification purposes. The CSUK is typically secured, such that is can only be used in the secure chipset to decrypt the CSSK from {CSSK}_{CSUK}.

The content decoder 15 can be external to the chipset 1 and is typically a part of the receiver.

Known conditional access systems use a key loading mechanism, such as shown in Fig.1, by sending an entitlement management message 'EMM' and entitlement control messages 'ECM' from a head-end system to the smartcard. The EMM contains the CSSK and its encrypted version {CSSK}_{CSUK}. The ECM contains the encrypted CW. The smartcard provides {CSSK}_{CSUK} to the receiver and uses the CSSK as a session key for loading a sequence of CWs.

Chipsets such as shown in Fig.1 support loading of cleartext (i.e. unencrypted) CWs into the descrambling part of the chipset or receiver. In Fig.1 this is depicted by input CW, which is provided to the blocking module 17. To avoid the cleartext CW from being used, a disable command is input to the DCCL module 16. If the CW is to be blocked from use, the DCCL module 16 provides a disable instruction to the blocking module 17 to block the CW from being provided to the content decryptor 10c.

Disadvantageously, the possibility of loading cleartext CWs enables bypassing of the secure loading of {CW}_{CSUK}. If, e.g., an attacker finds a way to obtain the cleartext CW, the cleartext CW can be loaded into chipsets or receivers using the cleartext CW loading mechanism. Moreover, the attacker may be able to block the disable command, thus retaining the possibility to load cleartext CWs.

There is a need for an improved solution for selectively and permanently disabling the use of cleartext CWs that are input to a chipset of a receiver from being used to descramble scrambled content.

### SUMMARY OF THE INVENTION

It is an object of the invention to enable substantially unblockable and selective disablement of cleartext control words that are input to a chipset of a receiver from being used to descramble scrambled content.

Various aspects and embodiments of the invention are set out in the appendeed claims.

According to an embodiment of the invention a chipset is proposed for obtaining a control word to descramble scrambled content in a content descrambler. The chipset comprises one or more inputs for receiving a cleartext control word, a first disable instruction, an encrypted Chip Set Session Key (hereinafter "CSSK") and an encrypted first control word. The chipset further comprises a first memory configured to store a Chip Set Unique Key (hereinafter "CSUK"). The chipset further comprises a first decryptor configured to decrypt the encrypted CSSK using the CSUK from the first memory. The chipset is configured to store the obtained CSSK in a second memory. The chipset further comprises a second decryptor configured to decrypt the encrypted first control word using the CSSK from the second memory. The chipset is configured to store the obtained first control word in a third memory for use by the content descrambler. The chipset further comprises a blocking module configured to conditionally store the cleartext control word in the third memory for use by the content descrambler. The blocking module is further configured to block the cleartext control word from being stored in the third memory if the first disable instruction is received. The chipset further comprises a trigger module configured to obtain a disable command that is received with the encrypted CSSK and, if the disable command is obtained, provide the disable command to the blocking module. The blocking module is further configured to block any cleartext control word from being stored in the third memory if the disable command is received.

According to an embodiment of the invention a method is proposed for blocking a cleartext control word from being used to descramble scrambled content in a content descrambler. The method comprises receiving an encrypted Chip Set Session Key (hereinafter "CSSK") and an encrypted first control word. The method further comprises decrypting the encrypted CSSK using a Chip Set Unique Key (hereinafter "CSUK") stored in a first memory and storing the obtained CSSK in a second memory. The method further comprises decrypting the encrypted first control word using the CSSK from the second memory and storing the obtained first control word in a third memory for use by the content descrambler. The method further comprises obtaining a disable command that is received with the encrypted CSSK. The method further comprises, if the disable command is obtained, blocking any cleartext control word received in the chipset from being stored in the third memory for use by the content descrambler.

In prior art chipsets the first disable instruction could be blocked to disable blocking of cleartext control words. Typically the first disable instruction is blocked for a particular content stream to allow pirated CWs for that stream to be used in the chipset.

Embodiments of the invention enable a disable command to block the cleartext control word from being used. The disable command is provided to the chipset with the encrypted CSSK. The encrypted CSSK is typically not blocked to enable the chipset to decrypt encrypted CWs for legitimately descrambling content using the decrypted CWs.

When the disable command is received, the cleartext loading mechanism of the chipset is disabled.

A content provider may choose not to disable the cleartext loading mechanism. The head-end system in the conditional access system must then be configured never to provide the disable command with the encrypted CSSK. In this scenario the cleartext control words can be used together with first disable instructions as in the prior art.

The invention set out in claim 1 advantageously enables the disable command to be provided without changing external hardware and/or software interfaces of the chipset.

The invention set out in claim 2 advantageously enables the disable command to be provided without changing external hardware and/or software interfaces of the chipset and with minimal changes in existing (prior art) elements of the chipset.

The embodiment of claim 3 advantageously enables the disable command and the disable instruction to the blocking module to be in different formats.

According to an aspect of the invention a receiver is proposed for use in a conditional access system. The receiver comprises the chipset having one or more of the above features.

According to an aspect of the invention a head-end system is proposed for use in a conditional access system and for provisioning of a CSSK and an encrypted CSSK to the chipset having one or more of the above features. The head-end system comprises a processor configured to generate a CSSK such that the disable command is obtained in the trigger function of the trigger module when using the CSSK as input. The head-end system further comprises a memory configured to store one or more CSUKs of one or more chipsets. The head-end system further comprises an encryptor configured to encrypt the CSSK using the CSUK of the secure chipset from the memory to obtain the encrypted CSSK. The head-end system further comprises a transmitter configured to transmit the CSSK and the encrypted CSSK to the chipset via the intermediary of a secure device.

According to an aspect of the invention a method is proposed for use in a head-end system and for provisioning of a CSSK and an encrypted CSSK to the secure chipset having one or more of the above features. The method comprises generating a CSSK such that the disable command is obtained in the trigger function of the trigger module when using the CSSK as input. The method further comprises encrypting the CSSK using a CSUK of the secure chipset to obtain the encrypted CSSK. The method further comprises transmitting the CSSK and the encrypted CSSK to the secure chipset via the intermediary of a secure device.

Thus, the head-end system can provide a disable command to the chipset without requiring external hardware and/or software interfaces of the chipset to be changed.

According to an aspect of the invention a head-end system is proposed for use in a conditional access system and for provisioning of a CSSK and an encrypted CSSK to the chipset having one or more of the above features. The head-end system comprises a processor configured to generate the encrypted CSSK such that the disable command is obtained in the trigger function of the trigger module when using the encrypted CSSK as input. The head-end system further comprises a memory configured to store one or more CSUKs of one or more chipsets. The head-end system further comprises a decryptor configured to decrypt the encrypted CSSK using the CSUK of the secure chipset from the memory to obtain a CSSK. The head-end system further comprises a transmitter configured to transmit the CSSK and the encrypted CSSK to the chipset via the intermediary of a secure device.

According to an aspect of the invention a method is proposed for use in a head-end system and for provisioning of a CSSK and an encrypted CSSK to the secure chipset having one or more of the above features. The method comprises generating the encrypted CSSK such that the disable command is obtained in the trigger function of the trigger module when using the encrypted CSSK as input. The method further comprises decrypting the encrypted CSSK using a CSUK of the secure chipset to obtain a CSSK. The method further comprises transmitting the CSSK and the encrypted CSSK to the secure chipset via the intermediary of a secure device.

Thus, the head-end system can provide a disable command to the chipset without requiring external hardware and/or software interfaces of the chipset to be changed and with minimal changes in existing (prior art) elements of the chipset.

The CSSK and the encrypted CSSK are typically transmitted from the head-end system to a secure device comprising the chipset in an entitlement management message and through the intermediary of a receiver. The encrypted control word is typically transmitted in an entitlement control message to the secure device.

According to an aspect of the invention a conditional access system is proposed comprising the receiver having one or more of the above features and the head-end system having one or more of the above features.

Hereinafter, embodiments of the invention will be described in further detail. It should be appreciated, however, that these embodiments may not be construed as limiting the scope of protection for the present invention.

### BRIEF DESCRIPTION OF THE DRAWINGS

Aspects of the invention will be explained in greater detail by reference to exemplary embodiments shown in the drawings, in which:
Fig.1 shows a prior art chipset;
Fig.2 shows a chipset which does not fall within the scope of the invention;
Fig.3 shows a chipset of an exemplary embodiment of the invention;
Fig.4 shows a chipset of another exemplary embodiment of the invention;
Fig.5 shows a conditional access system of an exemplary embodiment of the invention;
Fig.6 shows a method for use in a chipset of an exemplary embodiment of the invention;
Fig.7 shows a method for use in a chipset of another exemplary embodiment of the invention;
Fig.8 shows a method for use in a chipset of another exemplary embodiment of the invention;
Fig.9 shows a method for use in a head-end system of an exemplary embodiment of the invention; and
Fig.10 shows a method for use in a head-end system of another exemplary embodiment of the invention.

### DETAILED DESCRIPTION OF THE DRAWINGS

Operators of a conditional access system may want to use the cleartext CW mechanism in receivers. It is therefore desirable to have the possibility to choose whether or not the disabling of the cleartext CW loading mechanism is triggered. Hereto the invention enables selectively disabling of the cleartext CW loading mechanism, i.e. as long as the cleartext CW loading mechanism has not been disabled, loading of a cleartext CW and use of a disable command as shown in Fig.1 remains possible.

The invention enables a chipset in a receiver of a conditional access system to block cleartext control words provided to the chipset from being used to descramble content. Hereto the chipset comprises a trigger module configured to obtain a disable command that is received with an encrypted Chip Set Session Key (CSSK) and, if the disable command is obtained, have the chipset block any cleartext control word.

Fig. 2 shows a chipset which falls outside the scope of the invention, wherein chipset 1a is an improvement of the chipset 1 shown in Fig. 1. Decryptors 10b and 10c, read-only memory locations 11 and 12, read-and-write memory locations 13 and 14 and content decoder 15 are similar to the elements shown in Fig. 1. The content decoder 15 can be external to the chipset 1 and is typically a part of the receiver.

In the example of Fig.2, a disable command is received together with the CSSK as input encrypted under CSUK, which is denoted by {Disable, CSSK}_{CSUK}. After decryption in decryptor 10a, the decrypted disable command and the decrypted CSSK are temporary stored in memory location 13.

Trigger module 18a looks for the disable command in memory location 13. If the disable command is found, the disable command is provided by the trigger module 18a to the DCCL module 16a and the DCCL module 16a provides a disable instruction to the blocking module 17a to permanently block any cleartext CW from being provided to the content decryptor 10c. Thus, the cleartext CW loading mechanism can be permanently disabled.

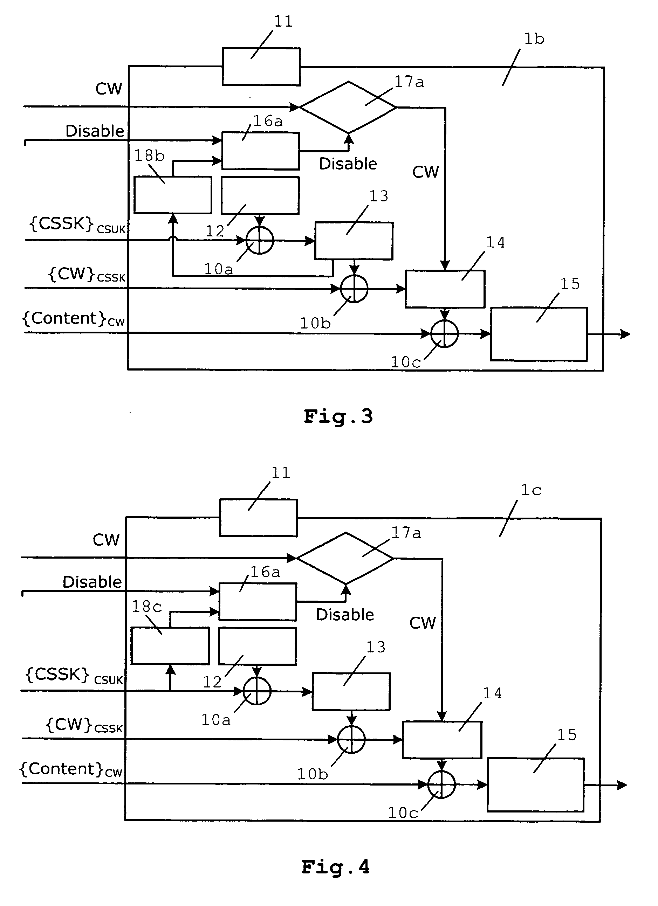

Fig.3 shows an exemplary embodiment of the invention, wherein chipset 1b is an alternative of the chipset 1a shown in Fig.2. The CSSK is input encrypted under CSUK, which is denoted by {CSSK}_{CSUK}. After decryption in decryptor 10a, the decrypted CSSK data is temporary stored in memory location 13. Trigger module 18b is configured to read the CSSK data from the memory location 13 and derive a disable command directly from the CSSK data.

Hereto the trigger module 18b is configured to execute a trigger function T to decide whether or not the CSSK data contains an implicit trigger for a disable command. Function T is e.g. a parity check with a binary output '0' or '1'. The result of the evaluation T(CSSK) → {0,1} determines if he disable command is implied by the CSSK data.

If the presence of an implied disable command is detected, a disable command is provided by the trigger module 18b to the DCCL module 16a and the DCCL module 16a provides a disable instruction to the blocking module 17a to permanently block any cleartext CW from being provided to the content decryptor 10c.

Fig.4 shows an alternative embodiment of the invention, wherein chipset 1c is an alternative of the chipset 1b shown in Fig.3. In the example of Fig.4 the {CSSK}_{CSUK} is input to decryptor 10a and to trigger module 18c.

In the example of Fig.4, the encrypted CSSK, i.e. {CSSK}_{CSUK}, forms the input to the trigger function T in trigger module 18c. The calculation of T({CSSK}CSUK) → {0,1} determines if the disable command is implied by the {CSSK}_{CSUK} input.

If the presence of an implied disable command is detected, a disable command is provided by the trigger module 18c to the DCCL module 16a and the DCCL module 16a provides a disable instruction to the blocking module 17a to permanently block any cleartext CW from being provided to the content decryptor 10c.

In the examples of Fig.3 and Fig.4 the trigger function T is a function with a binary output. As an example, a binary output '1' indicates that the cleartext CW loading mechanism is to be disabled thus not allowing any cleartext CWs to be used. An example of a Boolean trigger function T is the determination of an occurrence of a certain bit value or bit pattern in the input parameter. Another example is the calculation of the parity of the input parameter. It is possible to extend the trigger function T to map its input parameter to a larger set of valid output values. In this case the trigger module 18b,18c is configured to compare the output of the trigger function T with preconfigured values and provide a disable command to the disable module 16a depending on the outcome of the comparison.

In the examples of Fig.3 and Fig.4 the range of useable values for the CSSK keys may be limited. If e.g. the trigger function T is a parity function, half of the possible input parameter range decodes to an implicit disable command. Thus only half of all possible input parameters can be used as CSSK or {CSSK}_{CSUK} in case the cleartext CW loading mechanism is to be disabled.

The disable command obtained by the trigger module 18a,18b,18c and the disable command provided from the trigger module 18a,18b,18c to the disable module 16a may be formatted differently. Alternatively, the trigger module 18a,18b,18c may forward the obtained disable command to the disable module 16a.

The disable instruction provided from the disable module 16a to the trigger module 17a may be identical to the disable command received in the disable module 16a from the trigger module 18a,18b,18c. Alternatively, the disable instruction and the disable command may be formatted differently.

The DCCL module 16a may be a temporary buffer memory for storing the disable command and forwarding the disable command as a disable instruction to the blocking module 17. Alternatively the DCCL module 16a converts the disable command into the disable instruction.

Modules may be combined. E.g. the blocking module 16a and the disable module 17a may be implemented as a single module. E.g. the decryptors 10a, 10b and/or 10c may be implemented as a single module.

In the examples of Fig.3 and Fig.4, a head-end system provides - through the intermediary of a receiver and a secure device - the {CSSK}_{CSUK} data comprising the implicit disable command to the chipset 1b, 1c. To generate the {CSSK}_{CSUK} data comprising the implicit disable command, the head-end system selects a parameter, which may be random, that meets the intended behaviour for the trigger function T in the trigger module 18b,18c. In the example of Fig.3, the parameter represents the CSSK and the head-end system generates the {CSSK}_{CSUK} data by encrypting the parameter with the CSUK key. In the example of Fig.4 the parameter represents the {CSSK}_{CSUK} data and the head-end system calculates the value of CSSK by decrypting the parameter with the CSUK key.

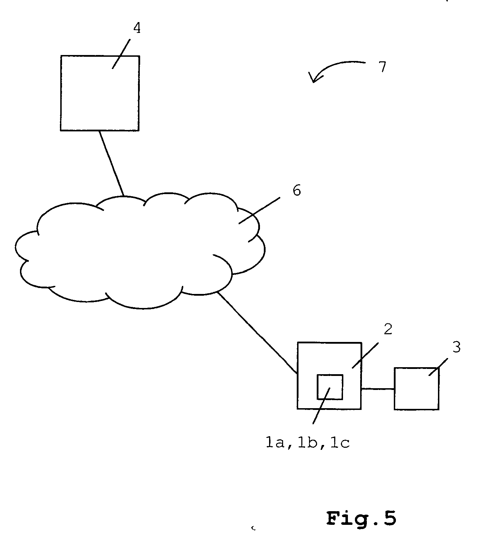

Fig.5 shows a conditional access system 7 of an exemplary embodiment of the invention. A head-end system 4 transmits ECMs, EMMs and a content stream scrambled with a CW (i.e. {Content}_{CW}) to one or more receivers 2 via the distribution network 6. The ECM typically contains one or more encrypted CWs. The EMM typically contains the CSSK and its encrypted version {CSSK}_{CSUK}. The ECMs and EMMs are processed by a secure device 3 that is communicatively connected to the receiver 2. The secure device 3 is e.g. a smartcard and may be implemented in software running in a secured environment of the receiver 2. The smartcard 3 obtains the CW by processing the input from the ECM and obtains the CSKK and the {CSSK}_{CSUK} from the EMM. The smartcard sends the CSSK to the chipset 1a,1b,1c of the receiver 2. The smartcard 3 re-encrypts the CW with the CSSK key shared between the secure device 3 and the chipset 1a,1b,1c of receiver 2. The decryption module 10b decrypts the CW before providing it to the decryptor 10c.

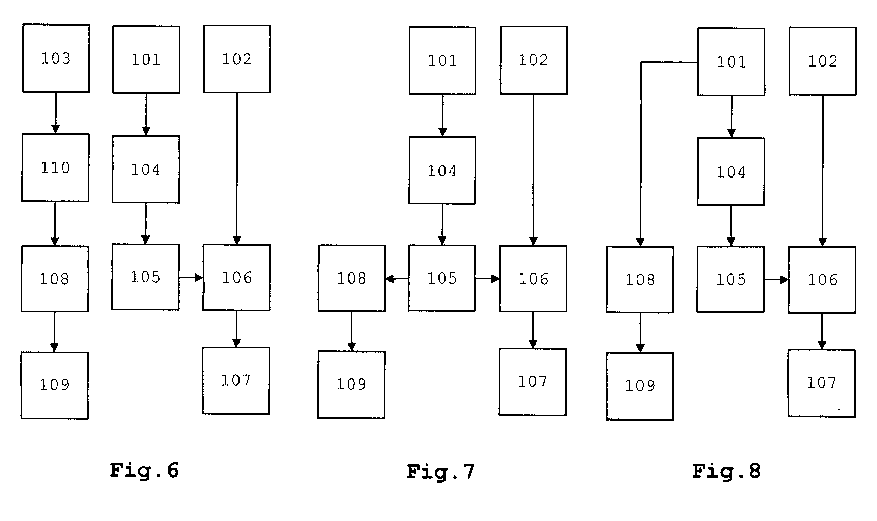

Fig.6 shows a method for use in the chipset shown in Fig.2. In step 101 the encrypted CSSK is received. In step 102 the encrypted first control word is received. The encrypted CSSK is decrypted in step 104 using the CSUK stored in the first memory 12. The obtained CSSK is stored in a second memory 13 in step 105. In step 106 the encrypted first control word is decrypted using the CSSK from the second memory 13. In step 107 the obtained first control word is stored in a third memory 14 for use by the content descrambler 10c. In step 103 the encrypted disable command is received. In step 110 the encrypted disable command is decrypted using the CSUK to obtain the disable command. In step 108 the disable command is obtained that is received with the encrypted CSSK. If the disable command is obtained, in step 109 any cleartext control word received in the chipset 1a,1b,1c is blocked from being stored in the third memory for use by the content descrambler 10c.

Fig.7 shows a method for use in the chipset shown in Fig.3. In step 101 the encrypted CSSK is received. In step 102 the encrypted first control word is received. The encrypted CSSK is decrypted in step 104 using the CSUK stored in the first memory 12. The obtained CSSK is stored in a second memory 13 in step 105. In step 106 the encrypted first control word is decrypted using the CSSK from the second memory 13. In step 107 the obtained first control word is stored in a third memory 14 for use by the content descrambler 10c. The disable command is obtained by processing the CSSK from the second memory 13 with a trigger function that uses the CSSK as input. In step 108 the disable command is obtained that is received with the encrypted CSSK. If the disable command is obtained, in step 109 any cleartext control word received in the chipset 1a,1b,1c is blocked from being stored in the third memory for use by the content descrambler 10c.

Fig.8 shows a method for use in the chipset shown in Fig.4. In step 101 the encrypted CSSK is received. In step 102 the encrypted first control word is received. The encrypted CSSK is decrypted in step 104 using the CSUK stored in the first memory 12. The obtained CSSK is stored in a second memory 13 in step 105. In step 106 the encrypted first control word is decrypted using the CSSK from the second memory 13. In step 107 the obtained first control word is stored in a third memory 14 for use by the content descrambler 10c. The disable command is obtained by processing the encrypted CSSK with a trigger function that uses the encrypted CSSK as input. In step 108 the disable command is obtained that is received with the encrypted CSSK. If the disable command is obtained, in step 109 any cleartext control word received in the chipset 1a,1b,1c is blocked from being stored in the third memory for use by the content descrambler 10c.

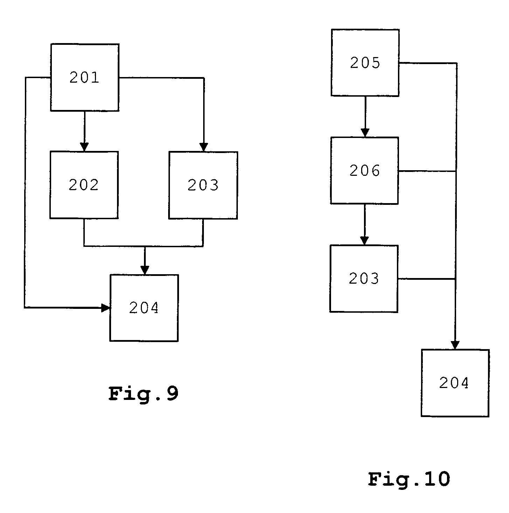

Fig.9 shows a method for use in a head-end system 4. In step 201 a CSSK is generated such that the disable command is obtained in the trigger function of the trigger module 18b when using the CSSK as input. In step 202 the CSSK is encrypted using a CSUK of the secure chipset 1b to obtain the encrypted CSSK, The CSSK and the encrypted CSSK are transmitted in step 204 to the secure chipset 1b via the intermediary of a secure device 3.

Fig.10 shows a method for use in another head-end system 4. In step 205 the encrypted CSSK is generated such that the disable command is obtained in the trigger function of the trigger module 18c when using the encrypted CSSK as input. In step 206 the encrypted CSSK is decrypted using a CSUK of the secure chipset (1b) to obtain a CSSK. The CSSK and the encrypted CSSK are transmitted in step 204 to the secure chipset 1c via the intermediary of a secure device 3.

It is to be understood that any feature described in relation to any one embodiment may be used alone, or in combination with other features described, and may also be used in combination with one or more features of any other of the embodiments, or any combination of any other of the embodiments. One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, flash memory, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory) on which alterable information is stored. Moreover, the invention is not limited to the embodiments described above, which may be varied within the scope of the accompanying claims.

## Claims

1. A chipset (1b) for obtaining a control word to descramble scrambled content in a content descrambler (10c), the chipset (1b) comprising:
one or more inputs for receiving a cleartext control word, a first disable instruction, an encrypted Chip Set Session Key (hereinafter "CSSK") and an encrypted first control word;
a first memory (12) configured to store a Chip Set Unique Key (hereinafter "CSUK");
a first decryptor (10a) configured to decrypt the encrypted CSSK using the CSUK from the first memory (12), the chipset (1b,) being configured to store the obtained CSSK in a second memory (13);
a second decryptor (10b) configured to decrypt the encrypted first control word using the CSSK from the second memory (13), the chipset (1b) further being configured to store the obtained first control word in a third memory (14) for use by the content descrambler (10c);
a blocking module (17a) configured to conditionally store the cleartext control word in the third memory (14) for use by the content descrambler (10c), the blocking module (17a) further configured to block the cleartext control word from being stored in the third memory (14) if the first disable instruction is received; and
a trigger module (18b) configured to obtain a disable command that is received with the encrypted CSSK and, if the disable command is obtained, provide the disable command to the blocking module (17a),
wherein the blocking module (17a) is further configured to block any cleartext control word from being stored in the third memory (14) if the disable command is received;
wherein the trigger module (18b) is configured to obtain the CSSK from the second memory (13) and is configured with a trigger function that uses the CSSK as input to obtain the disable command.

2. A chipset (1c) for obtaining a control word to descramble scrambled content in a content descrambler (10c), the chipset (1c) comprising:
one or more inputs for receiving a cleartext control word, a first disable instruction, an encrypted Chip Set Session Key (hereinafter "CSSK") and an encrypted first control word;
a first memory (12) configured to store a Chip Set Unique Key (hereinafter "CSUK");
a first decryptor (10a) configured to decrypt the encrypted CSSK using the CSUK from the first memory (12), the chipset (1c) being configured to store the obtained CSSK in a second memory (13);
a second decryptor (10b) configured to decrypt the encrypted first control word using the CSSK from the second memory (13), the chipset (1c) further being configured to store the obtained first control word in a third memory (14) for use by the content descrambler (10c);
a blocking module (17a) configured to conditionally store the cleartext control word in the third memory (14) for use by the content descrambler (10c), the blocking module (17a) further configured to block the cleartext control word from being stored in the third memory (14) if the first disable instruction is received; and
a trigger module (18c) configured to obtain a disable command that is received with the encrypted CSSK and, if the disable command is obtained, provide the disable command to the blocking module (17a),
wherein the blocking module (17a) is further configured to block any cleartext control word from being stored in the third memory (14) if the disable command is received;
wherein the trigger module (18c) is configured with a trigger function that uses the encrypted CSSK as input to obtain the disable command.

3. The chipset (1b, 1c) according to any of the preceding claims, further comprising a Disable Clear CW Loading (hereinafter "DCCL") module 16a configured to receive the disable command from the trigger module (18b, 18c) and convert the disable command into a second disable instruction for use by the blocking module (17a) instead of the disable command.

4. A receiver (2) for use in a conditional access system (7), the receiver (2) comprising the chipset (1b, 1c) according to any of the claims 1-3.

5. A head-end system (4) for use in a conditional access system (7) and for provisioning of a CSSK and an encrypted CSSK to the chipset (1b) according to claim 1, the head-end system (4) comprising:
a processor configured to generate a CSSK such that the disable command is obtained in the trigger function of the trigger module (18b) when using the CSSK as input;
a memory configured to store one or more CSUKs of one or more chipsets;
an encryptor configured to encrypt the CSSK using the CSUK of the secure chipset (1b) from the memory to obtain the encrypted CSSK; and
a transmitter configured to transmit the CSSK and the encrypted CSSK to the chipset (1b) via the intermediary of a secure device (3).

6. A head-end system (4) for use in a conditional access system (7) and for provisioning of a CSSK and an encrypted CSSK to the chipset (1c) according to claim 2, the head-end system (4) comprising:
a processor configured to generate the encrypted CSSK such that the disable command is obtained in the trigger function of the trigger module (18c) when using the encrypted CSSK as input;
a memory configured to store one or more CSUKs of one or more chipsets;
a decryptor configured to decrypt the encrypted CSSK using the CSUK of the secure chipset (1c) from the memory to obtain a CSSK; and
a transmitter configured to transmit the CSSK and the encrypted CSSK to the chipset (1c) via the intermediary of a secure device (3).

7. A conditional access system (7) comprising the receiver (2) according to claim 4 and the head-end system (4) according to claim 5 or claim 6.

8. A method for use in a chipset (1b) for blocking a cleartext control word from being used to descramble scrambled content in a content descrambler (10c), the method comprising:
receiving an encrypted Chip Set Session Key (hereinafter "CSSK") (101) and receiving (102) an encrypted first control word;
decrypting (104) the encrypted CSSK using a Chip Set Unique Key (hereinafter "CSUK") stored in a first memory (12) and storing (105) the obtained CSSK in a second memory (13);
decrypting (106) the encrypted first control word using the CSSK from the second memory (13) and storing the obtained first control word in a third memory (14) for use by the content descrambler (10c);
obtaining (108) a disable command that is received with the encrypted CSSK; and
if the disable command is obtained, blocking (109) any cleartext control word received in the chipset (1b) from being stored in the third memory (14) for use by the content descrambler (10c);
wherein the disable command is obtained by processing the CSSK from the second memory (13) with a trigger function that uses the CSSK as input.

9. A method for use in a chipset (1c) for blocking a cleartext control word from being used to descramble scrambled content in a content descrambler (10c), the method comprising:
receiving an encrypted Chip Set Session Key (hereinafter "CSSK") (101) and receiving (102) an encrypted first control word;
decrypting (104) the encrypted CSSK using a Chip Set Unique Key (hereinafter "CSUK") stored in a first memory (12) and storing (105) the obtained CSSK in a second memory (13);
decrypting (106) the encrypted first control word using the CSSK from the second memory (13) and storing the obtained first control word in a third memory (14) for use by the content descrambler (10c);
obtaining (108) a disable command that is received with the encrypted CSSK; and
if the disable command is obtained, blocking (109) any cleartext control word received in the chipset (1c) from being stored in the third memory (14) for use by the content descrambler (10c);
wherein the disable command is obtained by processing the encrypted CSSK with a trigger function that uses the encrypted CSSK as input.

10. A method for use in a head-end system (4) and for provisioning of a CSSK and an encrypted CSSK to the secure chipset (1b) according to claim 1, the method comprising:
generating (201) a CSSK such that the disable command is obtained in the trigger function of the trigger module (18b) when using the CSSK as input;
encrypting (202) the CSSK using a CSUK of the secure chipset (1b) to obtain the encrypted CSSK; and
transmitting (204) the CSSK and the encrypted CSSK to the secure chipset (1b) via the intermediary of a secure device (3).

11. A method for use in a head-end system (4) and for provisioning of a CSSK and an encrypted CSSK to the secure chipset (1c) according to claim 2, the method comprising:
generating (205) the encrypted CSSK such that the disable command is obtained in the trigger function of the trigger module (18c) when using the encrypted CSSK as input;
decrypting (206) the encrypted CSSK using a CSUK of the secure chipset (1b) to obtain a CSSK; and
transmitting (204) the CSSK and the encrypted CSSK to the secure chipset (1c) via the intermediary of a secure device (3).

## Patentansprüche

1. Chipsatz (1 b) zum Erhalt eines Steuerworts zum Entschlüsseln von verschlüsseltem Inhalt in einem Inhaltsdecoder (10c), wobei der Chipsatz (1 b) folgendes aufweist:
einen oder mehrere Eingänge zum Empfang eines Klartext-Steuerworts, eines ersten Sperrbefehls, eines verschlüsselten Chipsatz-Sitzungsschlüssels (nachstehend "CSSK") und eines verschlüsselten ersten Steuerworts;
einen ersten Speicher (12), der so gestaltet ist, dass er einen eindeutigen Chipsatz-Schlüssel (nachstehend "CSUK") speichert;
einen ersten Decodierer (10a), der so gestaltet ist, dass er den verschlüsselten CSSK unter Verwendung von CSUK aus dem ersten Speicher (12) entschlüsselt, wobei der Chipsatz (1b,) so gestaltet ist, dass er den erhaltenen CSSK in einem zweiten Speicher (13) speichert;
einen zweiten Decodierer (10b), der so gestaltet ist, dass er das verschlüsselte erste Steuerwort unter Verwendung des CSSK aus dem zweiten Speicher (13) entschlüsselt, wobei der Chipsatz (1 b) des Weiteren so gestaltet ist, dass er das erhaltene erste Steuerwort in einem dritten Speicher (14) speichert, zur Verwendung durch den Inhaltsdecoder (10c);
ein Sperrmodul (17a), das so gestaltet ist, dass es bedingt das Klartext-Steuerwort in dem dritten Speicher (14) speichert, zur Verwendung durch den Inhaltsdecoder (10c), wobei das Sperrmodul (17a) des Weiteren so gestaltet ist, dass es das Klartext-Steuerwort gegen Speichern in dem dritten Speicher (14) sperrt, wenn der erste Sperrbefehl empfangen wird; und
ein Trigger-Modul (18b), das so gestaltet ist, dass es eine Sperranweisung erhält, die mit dem verschlüsselten CSSK empfangen wird, und, wenn die Sperranweisung erhalten wird, das Sperrmodul (17a) mit der Sperranweisung versieht,
wobei das Sperrmodul (17a) des Weiteren so gestaltet ist, dass es jedes Klartext-Steuerwort gegen Speichern in dem dritten Speicher (14) sperrt, wenn die Sperranweisung empfangen wird;
wobei das Trigger-Modul (18b) so gestaltet ist, dass es den CSSK von dem zweiten Speicher (13) erhält, und mit einer Trigger-Funktion gestaltet ist, die den CSSK als Eingang zum Erhalt der Sperranweisung verwendet.

2. Chipsatz (1 c) zum Erhalt eines Steuerworts zum Entschlüsseln von verschlüsseltem Inhalt in einem Inhaltsdecoder (10c), wobei der Chipsatz (1 c) folgendes aufweist:
einen oder mehrere Eingänge zum Empfang eines Klartext-Steuerworts, eines ersten Sperrbefehls, eines verschlüsselten Chipsatz-Sitzungsschlüssels (nachstehend "CSSK") und eines verschlüsselten ersten Steuerworts;
einen ersten Speicher (12), der so gestaltet ist, dass er einen eindeutigen Chipsatz-Schlüssel (nachstehend "CSUK") speichert;
einen ersten Decodierer (10a) der so gestaltet ist, dass er den verschlüsselten CSSK unter Verwendung des CSUK aus dem ersten Speicher (12) entschlüsselt, wobei der Chipsatz (1c) so gestaltet ist, dass er den erhaltenen CSSK in einem zweiten Speicher (13) speichert;
einen zweiten Decodierer (10b), der so gestaltet ist, dass er das verschlüsselte erste Steuerwort unter Verwendung des CSSK aus dem zweiten Speicher (13) entschlüsselt, wobei der Chipsatz (1 c) des Weiteren so gestaltet ist, dass er das erhaltene erste Steuerwort in einem dritten Speicher (14) speichert, zur Verwendung durch den Inhaltsdecoder (10c);
ein Sperrmodul (17a), das so gestaltet ist, dass es bedingt das Klartext-Steuerwort in dem dritten Speicher (14) speichert, zur Verwendung durch den Inhaltsdecoder (10c), wobei das Sperrmodul (17a) des Weiteren so gestaltet ist, dass es das Klartext-Steuerwort gegen Speichern in dem dritten Speicher (14) sperrt, wenn der erste Sperrbefehl empfangen wird; und
ein Trigger-Modul (18c), das so gestaltet ist, dass es eine Sperranweisung erhält, die mit dem verschlüsselten CSSK empfangen wird, und, wenn die Sperranweisung erhalten wird, das Sperrmodul (17a) mit der Sperranweisung versieht,
wobei das Sperrmodul (17a) des Weiteren so gestaltet ist, dass es jedes Klartext-Steuerwort gegen Speichern in dem dritten Speicher (14) sperrt, wenn die Sperranweisung empfangen wird;
wobei das Trigger-Modul (18c) mit einer Trigger-Funktion gestaltet ist, die den verschlüsselten CSSK als Eingang zum Erhalt der Sperranweisung verwendet.

3. Chipsatz (1 b, 1 c) nach einem der vorhergehenden Ansprüche, der des Weiteren ein Disable Clear CW Loading (nachstehend "DCCL") Modul 16a aufweist, das so gestaltet ist, dass es die Sperranweisung von dem Trigger-Modul (18b, 18c) empfängt und die Sperranweisung in einen zweiten Sperrbefehl zur Verwendung durch das Sperrmodul (17a), statt der Sperranweisung, umwandelt.

4. Empfänger (2) zur Verwendung in einem System (7) mit bedingtem Zugang, wobei der Empfänger (2) den Chipsatz (1 b, 1 c) nach einem der Ansprüche 1 bis 3 aufweist.

5. Head-End-System (4) zur Verwendung in einem System (7) mit bedingtem Zugang und zur Bereitstellung von einem CSSK und einem verschlüsselten CSSK an den Chipsatz (1 b) gemäß Anspruch 1, wobei das Head-End-System (4) folgendes aufweist:
einen Prozessor, der so gestaltet ist, dass er einen CSSK erzeugt, so dass die Sperranweisung in der Trigger-Funktion des Trigger-Moduls (18b) erhalten wird, wenn der CSSK als Eingang verwendet wird;
einen Speicher, der so gestaltet ist, dass er einen oder mehrere CSUKs von einem oder mehreren Chipsätzen speichert;
einen Codierer, der so gestaltet ist, dass er den CSSK unter Verwendung des CSUK des sicheren Chipsatzes (1b) aus dem Speicher verschlüsselt, um den verschlüsselten CSSK zu erhalten; und
einen Sender, der so gestaltet ist, dass er den CSSK und den verschlüsselten CSSK an den Chipsatz (1 b) überträgt, über den Intermediär einer sicheren Vorrichtung (3).

6. Head-End-System (4) zur Verwendung in einem System (7) mit bedingtem Zugang und zur Bereitstellung von einem CSSK und einem verschlüsselten CSSK an den Chipsatz (1 c) gemäß Anspruch 2, wobei das Head-End-System (4) folgendes aufweist:
einen Prozessor, der so gestaltet ist, dass er den verschlüsselten CSSK erzeugt, so dass die Sperranweisung in der Trigger-Funktion des Trigger-Moduls (18c) erhalten wird, wenn der verschlüsselte CSSK als Eingang verwendet wird;
einen Speicher, der so gestaltet ist, dass er einen oder mehrere CSUKs von einem oder mehreren Chipsätzen speichert;
einen Decodierer, der so gestaltet ist, dass er den verschlüsselten CSSK unter Verwendung des CSUK des sicheren Chipsatzes (1 c) aus dem Speicher entschlüsselt, um einen CSSK zu erhalten; und
einen Sender, der so gestaltet ist, dass er den CSSK und den verschlüsselten CSSK an den Chipsatz (1c) überträgt, über den Intermediär einer sicheren Vorrichtung (3).

7. System (7) mit bedingtem Zugang, das den Empfänger (2) gemäß Anspruch 4 und das Head-End-System (4) gemäß Anspruch 5 oder 6 aufweist.

8. Verfahren zur Verwendung in einem Chipsatz (1 b) zum Sperren der Verwendung eines Klartext-Steuerworts zur Entschlüsselung von verschlüsseltem Inhalt in einem Inhaltsdecoder (10c), wobei das Verfahren folgendes aufweist:
Empfangen eines verschlüsselten Chipsatz-Sitzungsschlüssels (nachstehend "CSSK") (101) und Empfangen (102) eines verschlüsselten ersten Steuerworts;
Entschlüsseln (104) des verschlüsselten CSSK, unter Verwendung eines eindeutigen Chipsatz-Schlüssels (nachstehend "CSUK"), der in einem ersten Speicher (12) gespeichert ist, und Speichern (105) des erhaltenen CSSK in einem zweiten Speicher (13);
Entschlüsseln (106) des verschlüsselten ersten Steuerworts, unter Verwendung des CSSK aus dem zweiten Speicher (13) und Speichern des erhaltenen ersten Steuerworts in einem dritten Speicher (14), zur Verwendung durch den Inhaltsdecoder (10c);
Erhalt (108) einer Sperranweisung, die mit dem verschlüsselten CSSK empfangen wird; und
wenn die Sperranweisung erhalten wird, Sperren (109) eines jeden in dem Chipsatz (1 b) empfangenen Klartext-Steuerworts gegen ein Speichern in dem dritten Speicher (14), zur Verwendung durch den Inhaltsdecoder (10c);
wobei die Sperranweisung durch Verarbeiten des CSSK aus dem zweiten Speicher (13) mit einer Trigger-Funktion, die den CSSK als Eingang verwendet, erhalten wird.

9. Verfahren zur Verwendung in einem Chipsatz (1 c) zum Sperren der Verwendung eines Klartext-Steuerworts zur Entschlüsselung von verschlüsseltem Inhalt in einem Inhaltsdecoder (10c), wobei das Verfahren folgendes aufweist:
Empfangen eines verschlüsselten Chipsatz-Sitzungsschlüssels (nachstehend "CSSK") (101) und Empfangen (102) eines verschlüsselten ersten Steuerworts;
Entschlüsseln (104) des verschlüsselten CSSK, unter Verwendung eines eindeutigen Chipsatz-Schlüssels (nachstehend "CSUK"), der in einem ersten Speicher (12) gespeichert ist, und Speichern (105) des erhaltenen CSSK in einem zweiten Speicher (13);
Entschlüsseln (106) des verschlüsselten ersten Steuerworts, unter Verwendung des CSSK aus dem zweiten Speicher (13) und Speichern des erhaltenen ersten Steuerworts in einem dritten Speicher (14), zur Verwendung durch den Inhaltsdecoder (10c);
Erhalt (108) einer Sperranweisung, die mit dem verschlüsselten CSSK empfangen wird; und
wenn die Sperranweisung erhalten wird, Sperren (109) eines jeden in dem Chipsatz (1 c) empfangenen Klartext-Steuerworts gegen ein Speichern in dem dritten Speicher (14), zur Verwendung durch den Inhaltsdecoder (10c);
wobei die Sperranweisung durch Verarbeiten des verschlüsselten CSSK mit einer Trigger-Funktion, die den verschlüsselten CSSK als Eingang verwendet, erhalten wird.

10. Verfahren zur Verwendung in einem Head-End-System (4) und zur Bereitstellung eines CSSK und eines verschlüsselten CSSK an den sicheren Chipsatz (1 b) gemäß Anspruch 1, wobei das Verfahren folgendes aufweist:
Erzeugen (201) eines CSSK, so dass die Sperranweisung in der Trigger-Funktion des Trigger-Moduls (18b) erhalten wird, wenn der CSSK als Eingang verwendet wird;
Verschlüsseln (202) des CSSK, unter Verwendung eines CSUK des sicheren Chipsatzes (1 b) zum Erhalt des verschlüsselten CSSK; und
Übertragen (204) des CSSK und des verschlüsselten CSSK an den sicheren Chipsatz (1 b), über den Intermediär einer sicheren Vorrichtung (3).

11. Verfahren zur Verwendung in einem Head-End-System (4) und zur Bereitstellung eines CSSK und eines verschlüsselten CSSK an den sicheren Chipsatz (1 c) gemäß Anspruch 2, wobei das Verfahren folgendes aufweist:
Erzeugen (205) des verschlüsselten CSSK, so dass die Sperranweisung in der Trigger-Funktion des Trigger-Moduls (18b) erhalten wird, wenn der verschlüsselte CSSK als Eingang verwendet wird;
Entschlüsseln (206) des verschlüsselten CSSK, unter Verwendung eines CSUK des sicheren Chipsatzes (1b) zum Erhalt eines CSSK; und
Übertragen (204) des CSSK und des verschlüsselten CSSK an den sicheren Chipsatz (1 c), über den Intermediär einer sicheren Vorrichtung (3).

## Revendications

1. Jeu de puces (1b) destiné à obtenir un mot de commande pour désembrouiller du contenu embrouillé dans un désembrouilleur de contenu (10c), le jeu de puces (1b) comprenant :
une ou plusieurs entrées pour recevoir un mot de commande de texte en clair, une première instruction de désactivation, une clé de session de jeu de puces chiffrée (appelée ci-après « clé CSSK ») et un premier mot de commande chiffré ;
une première mémoire (12) configurée de manière à stocker une clé unique de jeu de puces (appelée ci-après « clé CSUK ») ;
un premier déchiffreur (10a) configuré de manière à déchiffrer la clé CSSK chiffrée, en utilisant la clé CSUK en provenance de la première mémoire (12), le jeu de puces (1b) étant configuré de manière à stocker la clé CSSK obtenue dans une deuxième mémoire (13) ;
un second déchiffreur (10b) configuré de manière à déchiffrer le premier mot de commande chiffré, en utilisant la clé CSSK en provenance de la deuxième mémoire (13), le jeu de puces (1b) étant en outre configuré de manière à stocker le premier mot de commande obtenu dans une troisième mémoire (14) afin qu'il soit utilisé par le désembrouilleur de contenu (10c) ;
un module de blocage (17a) configuré de manière à stocker conditionnellement le mot de commande de texte en clair dans la troisième mémoire (14) afin qu'il soit utilisé par le désembrouilleur de contenu (10c), le module de blocage (17a) étant en outre configuré de manière à bloquer le stockage du mot de commande de texte en clair dans la troisième mémoire (14) si la première instruction de désactivation est reçue ; et
un module de déclenchement (18b) configuré de manière à obtenir une commande de désactivation qui est reçue avec la clé CSSK chiffrée et, si la commande de désactivation est obtenue, à fournir la commande de désactivation au module de blocage (17a) ;
dans lequel le module de blocage (17a) est en outre configuré de manière à bloquer le stockage de tout mot de commande de texte en clair dans la troisième mémoire (14) si la commande de désactivation est reçue ;
dans lequel le module de déclenchement (18b) est configuré de manière à obtenir la clé CSSK à partir de la deuxième mémoire (13) et est configuré avec une fonction de déclenchement qui utilise la clé CSSK en qualité d'entrée en vue d'obtenir la commande de désactivation.

2. Jeu de puces (1c) destiné à obtenir un mot de commande pour désembrouiller du contenu embrouillé dans un désembrouilleur de contenu (10c), le jeu de puces (1c) comprenant :
une ou plusieurs entrées pour recevoir un mot de commande de texte en clair, une première instruction de désactivation, une clé de session de jeu de puces chiffrée (appelée ci-après « clé CSSK ») et un premier mot de commande chiffré ;
une première mémoire (12) configurée de manière à stocker une clé unique de jeu de puces (appelée ci-après « clé CSUK ») ;
un premier déchiffreur (10a) configuré de manière à déchiffrer la clé CSSK chiffrée, en utilisant la clé CSUK en provenance de la première mémoire (12), le jeu de puces (1c) étant configuré de manière à stocker la clé CSSK obtenue dans une deuxième mémoire (13) ;
un second déchiffreur (10b) configuré de manière à déchiffrer le premier mot de commande chiffré, en utilisant la clé CSSK en provenance de la deuxième mémoire (13), le jeu de puces (1c) étant en outre configuré de manière à stocker le premier mot de commande obtenu dans une troisième mémoire (14) afin qu'il soit utilisé par le désembrouilleur de contenu (10c) ;
un module de blocage (17a) configuré de manière à stocker conditionnellement le mot de commande de texte en clair dans la troisième mémoire (14) afin qu'il soit utilisé par le désembrouilleur de contenu (10c), le module de blocage (17a) étant en outre configuré de manière à bloquer le stockage du mot de commande de texte en clair dans la troisième mémoire (14) si la première instruction de désactivation est reçue ; et
un module de déclenchement (18c) configuré de manière à obtenir une commande de désactivation qui est reçue avec la clé CSSK chiffrée et, si la commande de désactivation est obtenue, à fournir la commande de désactivation au module de blocage (17a) ;
dans lequel le module de blocage (17a) est en outre configuré de manière à bloquer le stockage de tout mot de commande de texte en clair dans la troisième mémoire (14) si la commande de désactivation est reçue ;
dans lequel le module de déclenchement (18c) est configuré avec une fonction de déclenchement qui utilise la clé CSSK chiffrée en qualité d'entrée en vue d'obtenir la commande de désactivation.

3. Jeu de puces (1b, 1c) selon l'une quelconque des revendications précédentes, comprenant en outre un module de chargement de mot de commande CW de suppression de désactivation (16a) (appelé ci-après « DCCL ») configuré de manière à recevoir la commande de désactivation en provenance du module de déclenchement (18b, 18c) et à convertir la commande de désactivation en une seconde instruction de désactivation destinée à être utilisée par le module de blocage (17a) au lieu de la commande de désactivation.

4. Récepteur (2) destiné à être utilisé dans un système d'accès conditionnel (7), le récepteur (2) comprenant le jeu de puces (1b, 1c) selon l'une quelconque des revendications 1 à 3.

5. Système de tête de réseau (4) destiné à être utilisé dans un système d'accès conditionnel (7), et destiné au provisionnement d'une clé CSSK et d'une clé CSSK chiffrée au jeu de puces (1b) selon la revendication 1, le système de tête de réseau (4) comprenant :
un processeur configuré de manière à générer une clé CSSK, de sorte que la commande de désactivation est obtenue dans la fonction de déclenchement du module de déclenchement (18b) lors de l'utilisation de la clé CSSK en qualité d'entrée ;
une mémoire configurée de manière à stocker une ou plusieurs clés CSUK d'un ou plusieurs jeux de puces ;
un chiffreur configuré de manière à chiffrer la clé CSSK en utilisant la clé CSUK du jeu de puces sécurisé (1b) en provenance de la mémoire en vue d'obtenir la clé CSSK chiffrée ; et
un émetteur configuré de manière à transmettre la clé CSSK et la clé CSSK chiffrée au jeu de puces (1b) par l'intermédiaire d'un dispositif sécurisé (3).

6. Système de tête de réseau (4) destiné à être utilisé dans un système d'accès conditionnel (7), et destiné au provisionnement d'une clé CSSK et d'une clé CSSK chiffrée au jeu de puces (1c) selon la revendication 2, le système de tête de réseau (4) comprenant :
un processeur configuré de manière à générer la clé CSSK chiffrée, de sorte que la commande de désactivation est obtenue dans la fonction de déclenchement du module de déclenchement (18c) lors de l'utilisation de la clé CSSK chiffrée en qualité d'entrée ;
une mémoire configurée de manière à stocker une ou plusieurs clés CSUK d'un ou plusieurs jeux de puces ;
un déchiffreur configuré de manière à déchiffrer la clé CSSK chiffrée, en utilisant la clé CSUK du jeu de puces sécurisé (1c) en provenance de la mémoire en vue d'obtenir une clé CSSK ; et
un émetteur configuré de manière à transmettre la clé CSSK et la clé CSSK chiffrée au jeu de puces (1b) par l'intermédiaire d'un dispositif sécurisé (3).

7. Système d'accès conditionnel (7) comprenant le récepteur (2) selon la revendication 4 et le système de tête de réseau (4) selon la revendication 5 ou 6.

8. Procédé destiné à être utilisé dans un jeu de puces (1b) en vue de bloquer l'utilisation d'un mot de commande de texte en clair pour désembrouiller un contenu embrouillé dans un désembrouilleur de contenu (10c), le procédé comprenant :
la réception d'une clé de session de jeu de puces chiffrée (appelée ci-après « clé CSSK ») (101) et la réception (102) d'un premier mot de commande chiffré ;
le déchiffrement (104) de la clé CSSK chiffrée, en utilisant une clé unique de jeu de puces (appelée ci-après « clé CSUK ») stockée dans une première mémoire (12), et le stockage (105) de la clé CSSK obtenue dans une deuxième mémoire (13) ;
le déchiffrement (106) du premier mot de commande chiffré, en utilisant la clé CSSK en provenance de la deuxième mémoire (13), et le stockage du premier mot de commande obtenu dans une troisième mémoire (14) afin qu'il soit utilisé par le désembrouilleur de contenu (10c) ;
l'obtention (108) d'une commande de désactivation qui est reçue avec la clé CSSK chiffrée ; et
si la commande de désactivation est obtenue, le blocage du stockage (109) de tout mot de commande de texte en clair reçu dans le jeu de puces (1b), dans la troisième mémoire (14), afin qu'il soit utilisé par le désembrouilleur de contenu (10c) ;
dans lequel la commande de désactivation est obtenue par le traitement de la clé CSSK à partir de la deuxième mémoire (13) avec une fonction de déclenchement qui utilise la clé CSSK en qualité d'entrée.

9. Procédé destiné à être utilisé dans un jeu de puces (1c) en vue de bloquer l'utilisation d'un mot de commande de texte en clair pour désembrouiller un contenu embrouillé dans un désembrouilleur de contenu (10c), le procédé comprenant :
la réception d'une clé de session de jeu de puces chiffrée (appelée ci-après « clé CSSK ») (101) et la réception (102) d'un premier mot de commande chiffré ;
le déchiffrement (104) de la clé CSSK chiffrée, en utilisant une clé unique de jeu de puces (appelée ci-après « clé CSUK ») stockée dans une première mémoire (12), et le stockage (105) de la clé CSSK obtenue dans une deuxième mémoire (13) ;
le déchiffrement (106) du premier mot de commande chiffré, en utilisant la clé CSSK en provenance de la deuxième mémoire (13), et le stockage du premier mot de commande obtenu dans une troisième mémoire (14) afin qu'il soit utilisé par le désembrouilleur de contenu (10c) ;
l'obtention (108) d'une commande de désactivation qui est reçue avec la clé CSSK chiffrée ; et
si la commande de désactivation est obtenue, le blocage (109) du stockage de tout mot de commande de texte en clair reçu dans le jeu de puces (1c), dans la troisième mémoire (14), afin qu'il soit utilisé par le désembrouilleur de contenu (10c) ;
dans lequel la commande de désactivation est obtenue par le traitement de la clé CSSK avec une fonction de déclenchement qui utilise la clé CSSK en qualité d'entrée.

10. Procédé destiné à être utilisé dans un système de tête de réseau (4) et destiné au provisionnement d'une clé CSSK et d'une clé CSSK chiffrée au jeu de puces sécurisé (1b) selon la revendication 1, le procédé comprenant :
la génération (201) d'une clé CSSK, de sorte que la commande de désactivation est obtenue dans la fonction de déclenchement du module de déclenchement (18b) lors de l'utilisation de la clé CSSK en qualité d'entrée ;
le chiffrement (202) de la clé CSSK en utilisant une clé CSUK du jeu de puces sécurisé (1b) en vue d'obtenir la clé CSSK chiffrée ; et
la transmission (204) de la clé CSSK et de la clé CSSK chiffrée au jeu de puces sécurisé (1b) par l'intermédiaire d'un dispositif sécurisé (3).

11. Procédé destiné à être utilisé dans un système de tête de réseau (4) et destiné au provisionnement d'une clé CSSK et d'une clé CSSK chiffrée au jeu de puces sécurisé (1c) selon la revendication 2, le procédé comprenant :
la génération (205) de la clé CSSK, de sorte que la commande de désactivation est obtenue dans la fonction de déclenchement du module de déclenchement (18c) lors de l'utilisation de la clé CSSK chiffrée en qualité d'entrée ;
le déchiffrement (206) de la clé CSSK chiffrée, en utilisant une clé CSUK du jeu de puces sécurisé (1b) en vue d'obtenir une clé CSSK ; et
la transmission (204) de la clé CSSK et de la clé CSSK chiffrée au jeu de puces sécurisé (1c) par l'intermédiaire d'un dispositif sécurisé (3).
